# EUROPEAN PATENT APPLICATION

(11) **EP 1 396 394 A1**
(43) Date of publication of application: **10.03.2004**
(21) Application number: 02769601.2
(22) Date of filing: 15.05.2002
(51) Int. Cl.: B60R 21/26

(54) **GAS GENERATOR**

(30) Priority: 15.05.2001 JP 2001144135
(71) Applicant: Nippon Kayaku Kabushiki Kaisha, Tokyo 102-8172 (JP)
(72) Inventor: TANAKA, Akihiko NIPPON KAYAKU KABUSHIKI-KAISHA, Himeji-shi, Hyogo 679-2123 (JP); MARUYAMA, Junya NIPPON KAYAKU KABUSHIKI-KAISHA, Himeji-shi, Hyogo 679-2123 (JP); YAMASHITA, Kenichiro NIPPON KAYAKU K.K., Himeji-shi, Hyogo 679-2123 (JP)
(74) Representative: Cardy, Sophie
(86) International application number: PCT/JP2002/004684
(87) International publication number: WO 2002/092400

(57) **Abstract**

In a first cup 2, a second cup 12 of an ignitor 4 is inserted in an engaged state, a sealing member 19 is disposed between an end 2c of the first cup 2 and the ignitor 4, and the end 2c and the ignitor 4 are fixed by co-fastening due to crimping a holder 5 toward the ignitor 4.

## Description

### Technical Field

The present invention relates to a small size gas generator that is used to actuate, in the event of emergency (at the time of motor vehicle collision), a motor vehicle safety device having movable parts such as a sheet belt pretensioner, a vehicular occupant restraint from forward movement, a movable headrest and a battery current breaker.

### Background Art

The gas generator is attached to, for instance, a cylinder, actuates a piston owing to a pressure of a generated gas, and thereby actuates, with a driving force thereof, the motor vehicle safety device.

A conventional gas generator has a structure in which an ignitor that is ignited by an actuation current is fixed through a first sealing member to a first fixing portion inside of a holder by crimping or the like, a cup that accommodates gas generants is put so as to cover the ignitor, and an end of the cup is fixed through a second sealing member to a second fixing portion outside of the holder by crimping or the like.

The gas generator, in order to fix the cup that has accommodated the gas generants against the holder with the cup shielded from ambient air, separately from the first fixing portion that fixes the internal ignitor, has the second fixing portion that fixes an external end of the holder. Furthermore, the holder is separately provided with the first sealing member between the ignitor and the holder and the second sealing member between the cup and the holder.

The conventional gas generator has two fixing portions and two sealing portions, and two portions each have to be unfailingly fixed and sealed. Furthermore, since two fixing portions are separately located, an external diameter is forced to be larger, resulting in difficulty in coping with a smaller size of a device and in obtaining higher output power.

The present invention was performed in view of such conventional problems and intends to provide a gas generator in which fixing structures of an ignitor to a holder and that of a cup to the holder can be shared and the sealing also can be securely performed.

Furthermore, by providing a gas generator having a slender external diameter, in the above safety device, a slender cylinder can be used; as a result, at the same use amount of the gas generants, an output higher than ever is intended to be extracted.

### Disclosure of Invention

A gas generator according to the invention includes a bottomed cylindrical first cup that accommodates gas generants that generate a gas owing to combustion; an ignitor disposed partially inserted into the first cup; and a holder that covers the ignitor and holds an end side of the first cup: wherein the end of the first cup and the ignitor are fixed by co-fastening the holder to the ignitor.

The end of the first cup and the ignitor are fixed by co-fastening the holder toward the ignitor, accordingly the ignitor and the end of the first cup are fixed against the holder at one place. Accordingly, manufacture can be conveniently performed and a structure can be simplified, resulting in realizing a smaller size gas generator.

Furthermore, the gas generator according to the invention is provided with a sealing member between the end of the first cup and the ignitor.

When the sealing member between the end of the first cup and the ignitor operates, gas generants in the first cup is hermetically sealed covered with the ignitor.

Still furthermore, in the gas generator according to the invention, the ignitor includes a second cup that accommodates igniting agents; and a plug that holds the second cup: wherein the exterior of the second cup is inserted inside of the first cup in an engaged state.

Since the second cup that accommodates the igniting agents is inserted in an engaged state in the first cup that accommodates the gas generants, the first cup is guided by the second cup and fixed to the holder in a state where the first cup is held by the ignitor. Furthermore, since the second cup is reinforced with the first cup, an external periphery of the second cup and an internal periphery of the first cup are preferably substantially the same.

Furthermore, in the gas generator according to the invention, the end of the first cup is inserted so as to touch the plug, and the sealing member is disposed in a boundary portion between the second cup and the plug.

With the sealing member inserting into the boundary portion between the second cup and the plug, the end of the first cup touches the plug; accordingly, a position of the sealing member such as an O-ring is stabilized.

Still furthermore, in the gas generator according to the invention, the end of the first cup and the plug thereto the end touches each are formed in a mutually tapered surface.

A touching state of the end of the first cup and the plug can be stabilized. In addition, owing to the tapered surface, the gas generants can be easily accommodated in the first cup.

Furthermore, in the gas generator according to the invention, the ignitor and the end of the first cup are fixed by crimping the holder toward the ignitor.

When the touching between the end of the first cup and the plug is formed on the tapered surface and the holder is crimped toward the plug, the co-fastening can be solidly performed.

### Brief Description of the Drawings

Fig. 1 is a sectional view of a gas generator involving an embodiment of the present invention.
Fig. 2 is a sectional view of an ignitor that is used in the gas generator shown in Fig. 1.
Fig. 3 is a sectional view of another example of an ignitor that is used in a gas generator.
Fig. 4 shows a summary of specifications of a gas generator that was used in a 10 cc bomb test as an embodiment.
Fig. 5 is a diagram showing results of the 10 cc bomb test.
Fig. 6 is a schematic diagram of a measurement instrument that was used in the 10 cc bomb test.

### Best Mode for Carrying Out the Invention

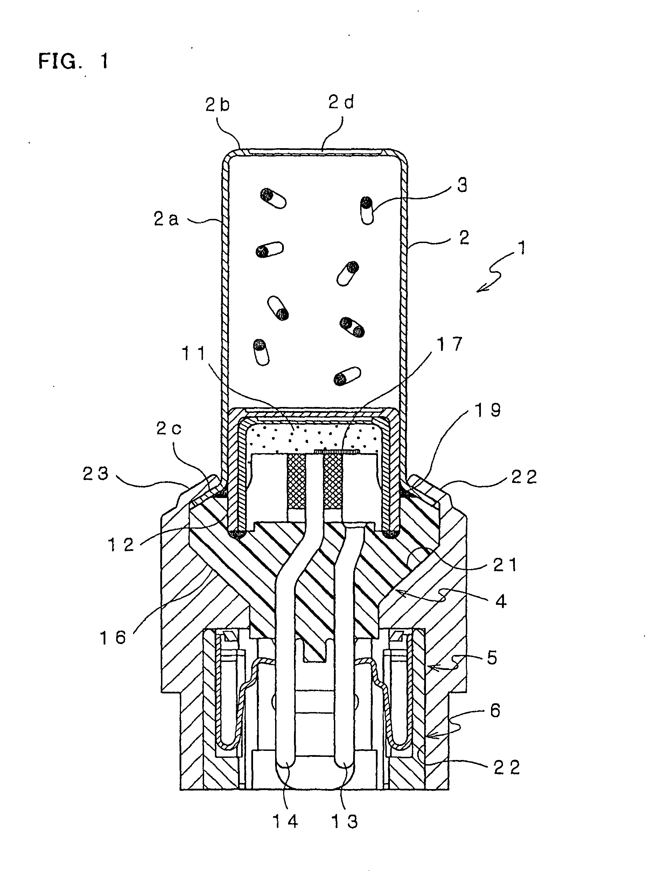

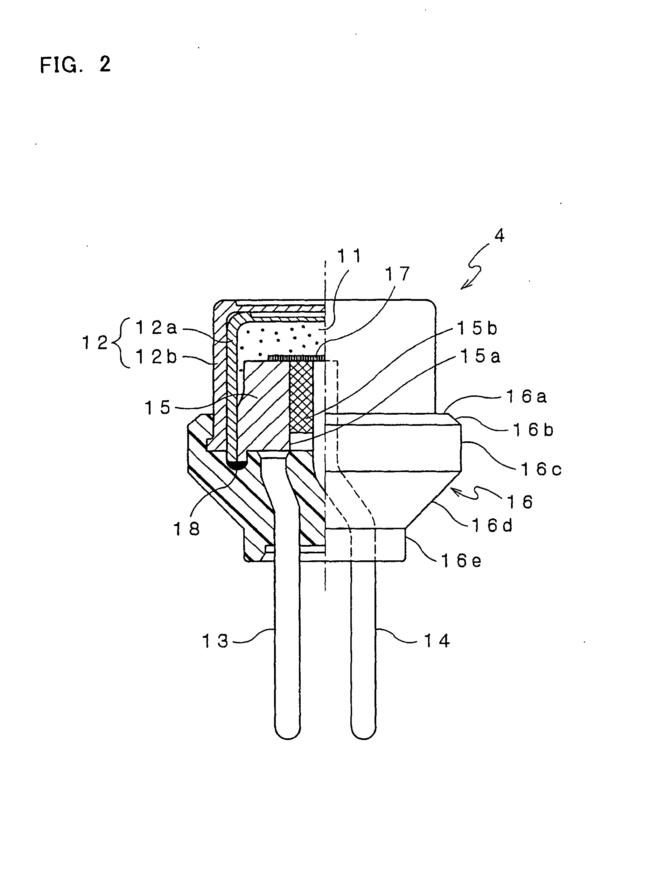

In the following, an example of an embodiment of the invention will be explained with reference to the drawings. Fig. 1 is a sectional view of a gas generator, and Fig. 2 is a sectional view of an ignitor.

In Fig. 1, a gas generator 1 includes a first cup 2, gas generants 3, an ignitor 4 and a holder 5.

The first cup 2 includes a cylinder portion 2a, a bottom portion 2b on a tip end side or an upper end side of the cylinder portion 2a and a skirt portion 2c having an expanded diameter on an end side or a lower end side of the cylinder portion 2a, and has a bottomed cylindrical shape as a whole. As materials of the first cup 2, metallic materials such as stainless steel, aluminum, brass and iron can be preferably used, but resins also can be used. On an external surface of the bottom portion 2b of the first cup 2, a plurality of linear notches 2d radially extending from a center thereof is disposed. The skirt portion 2c having an expanded diameter of the first cup 2 functions as taper-like flange supported by the ignitor 4 and the holder 5 described later.

The gas generants 3 are accommodated so as to directly come into contact with an internal periphery of the first cup 2. At the time of combustion of the gas generants 3 that are accommodated in the first cup 2, the notches 2d are broken and thereby gas is directly released to motor vehicle safety devices such as a sheet belt pretensioner, a vehicular occupant restraint from forward movement, a movable headrest and a battery current breaker that are not shown in the drawing.

The ignitor 4, as shown in Fig. 2, includes igniting agents 11; a second cup 12 therein the igniting agents 11 is accommodated; two pins 13, 14 erected so as to energize a current to ignite the igniting agents 11; a cap body 15 thereto the pins 13, 14 are attached; and a plug 16 that covers a lower portion of the second cup 12 and holds it. As the igniting agents 11, ones that contain, for instance, zirconium, tungsten, potassium perchlorate and a binder can be used.

The second cup 12 has a bottomed cylindrical shape in which a metallic internal cup 12a and an external cup 12b made of an insulating resin are superposed. The igniting agents 11 is accommodated inside of the second cup 12, and the second cup is clogged with a metallic cap body 15. The pin 13 is connected to a lower portion of the cap body 15 in an erected manner, and the pin 14 is penetratingly attached through a glass seal 15b that is an insulator to a through hole 15a in a center of the cap body 15. Between an upper end of the pin 14 and a top surface of the cap body 15, an electric bridge wire 17 that is heated owing to the energization is attached. A lower end of the metallic internal cup 12a and a lower side periphery of the cap body 15 are connected by laser welding 18 or the like.

The plug 16 is a resin molded body and, with a lower end side of the second cup 12 and portions projected from the cap body 15 of the pins 13, 14 covered, holds these. An external periphery of the plug 16 has a shape that includes a step portion 16a in a boundary portion with the second cup 12; a tapered portion 16b with an expanded diameter; a cylinder solid portion with a large diameter 16c; a tapered portion with a contracted diameter 16d; and a cylinder solid portion with a small diameter 16e.

As resins that can be used in resin molding of the plug 16, ones in which resins such as polybutylene terephthalate, polyethylene terephthalate, nylon 6, nylon 66, nylon 12, polyphenylene sulfide, polyphenylene oxide, polyethylene imide, polyether imide, polyether ether ketone or polyether sulfone contain glass fiber, carbon or the like can be cited.

In Fig. 1, in an internal periphery of the first cup 2, an external periphery of the second cup 12 is engaged. Both are preferably brought into substantial close contact, a separation between both is preferably 1 mm or less, and more preferably 0.2 mm or less. The skirt portion with an expanded diameter 2c of the first cup 2 has a length that runs along the sealing portion with an expanded diameter 16b (Fig. 2) of the plug 16. Along the step portion 16a (Fig. 2) in the boundary portion with the second cup 12 of the plug 16, an O-ring 19 is engaged as a sealing member and pressed down with a root of the skirt portion 2c with an expanded diameter of the first cup 2.

The holder 5 is made of a metallic material such as stainless steel, aluminum, brass or iron or a hard resin material. The holder 5 includes a first hole 21 that is used to engage from above, of the external periphery of the plug 16 of the ignitor 4, the cylinder solid portion with a large diameter 16b, the contracted diameter portion 16c and the cylinder solid portion with a small diameter 16d; a second hole 22 that allows engaging a shorting clip 6 from below; and a protruded portion 23 that extends upward from the first hole 21 and can be compressed inward or crimped. The holder 5 allows locating the ignitor 4 in a center of the first cup 2, and fixes a position of the first cup 2 and holds the plug 16 of the ignitor 4.

The shorting clip 6 is attached to keep two pins 13, 14 of the ignitor 4 in a shorted state. The shorting clip 6 is used until the gas generator 1 is attached in a normal state to prevent malfunction due to static electricity from occurring.

The gas generator 1 thus constituted can be manufactured according to the following procedure. The first cup 2 therein a predetermined amount of gas generants 3 is accommodated is prepared. The ignitor 4 in which along the step portion 16a (Fig. 2) that is a boundary portion between the plug 16 and the second cup 12 the O-ring 19 is engaged is prepared. Inside of the first cup 2, the second cup 12 of the ignitor 4 is engaged. It is confirmed that the skirt portion 2c having an expanded diameter of the first cup 2 touches the tapered portion 16b with an expanded diameter (Fig. 2) of the plug 16 and is in a state capable of pressing down the O-ring 19.

A set of the first cup 2 and the ignitor 4 is engaged in the first hole 21 of the holder 5, the projection 23 is crimped toward the plug 16 of the ignitor 4, and thereby the first cup 2 and the ignitor 4 are co-fastened and fixed to the holder 5. At this time, the O-ring 19 intervened between the first cup 2 and the ignitor 4 is pressed down in a crashing manner and hermetically seals between the ignitor 4 of the first cup 2 and the second cup 12 of the ignitor 4.

In the next place, operations of the gas generator 1 will be explained. When the gas generator 1 is connected to a connector in a normal state, the short-circuited state due to the shorting clip 6 is relieved. When in this state a collision sensor (not shown in the drawing) senses a collision of a motor vehicle, the pins 13, 14 erected in the ignitor 4 are energized. The bridge wire 17 in the ignitor 4 is heated and thereby the igniting agents 11 is ignited. A weak portion of a bottom of the second cup 12 is broken and through this portion high temperature and high pressure gas and particles are at a breath sprayed to the gas generants 3 in the first cup 2. Thereby, the gas generants 3 are ignited. Subsequently, a lot of gas generated within the first cup 2 owing to the combustion of the gas generants 3 rapidly increase an internal pressure of the first cup 2, finally breaks the notch portion 2d disposed at the bottom portion 2b of the first cup 2, and is introduced into the motor vehicle safety devices such as the sheet belt pretensioner, the occupant restraint from forward movement, the movable headrest, and the battery current breaker that are not shown in the drawing.

In the next place, a preferable gas generants 3 in the first cup 2 will be explained. The gas generants that can be used in a gas generator according to the invention are one that contain, for instance, a nitrogen-containing organic compound and an inorganic compound, and, as needs arise, additives may be added thereto. The nitrogen-containing organic compound mainly plays the role of a fuel component. Furthermore, the inorganic compound mainly plays the role of an oxidizing component.

As the nitrogen-containing organic compounds, at least one kind or more selected from a group of amino-tetrazole, guanidine nitrate, and nitroguanidine can be cited. As the inorganic compounds, at least one kind or more selected from a group of strontium nitrate, ammonium nitrate, potassium nitrate, ammonium perchlorate, and potassium perchlorate can be cited.

As the additive, molybdenum trioxide that is a self-igniting catalyst can be cited. Furthermore, as other additives that can be added to the gas generants, a binder and so on can be cited. As the binder, at least one kind or more selected from a group of guar gum, methyl cellulose, carboxy methyl cellulose, nitrocellulose, water-soluble cellulose ether, and polyethylene glycol can be cited.

The preferable gas generants are gas generants that contain as the nitrogen-containing organic compounds, 5-aminotetrazole and guanidine nitrate; as the inorganic compound, strontium nitrate and ammonium perchlorate; as the self-igniting catalyst, molybdenum trioxide; and as the binder, guar gum. The more preferable gas generants are one that contain from 10 to 30 % by mass of 5-aminotetrazole and from 15 to 35 % by mass of guanidine nitrate as the nitrogen-containing organic compound; from 10 to 30 % by mass of strontium nitrate and from 15 to 35 % by mass ammonium perchlorate as the inorganic compound; from 1 to 10 % by mass of molybdenum trioxide as the self-igniting catalyst; and from 1 to 10 % by mass of guar gum as the binder.

A manufacturing method of the gas generants 3 will be explained. Predetermined amounts of the respective components of the gas generants 3 are weighed. After weighing, the respective components are thoroughly blended with a V blender. To the above mixture, from 10 to 30 % by mass of water is added followed by further blending. A wet mixture is kneaded with a kneader and thereby a glutinous mass is obtained. This mass is formed into a desired shape by use of a vacuum extruder. This is dried first at 60 degree centigrade for 15 hr, then at 100 degree centigrade for 5 hr, and thereby desired gas generants 3 are obtained. Furthermore, so far used smokeless powder also can be excellently used as the gas generants 3.

Effects of the gas generator 1 involving the above embodiment will be explained below.
(1) The holding of the ignitor 4 to the holder 5 and the holding of the first cup 2 to the ignitor 4 are performed by co-fastening according to the crimping of the protrusion 23 of the holder 5 toward the plug 16 of the ignitor 4 and the skirt portion 2c with an expanded diameter of the first cup 2; accordingly, by crimping one point, the gas generator 1 can be formed. In comparison with a conventional example where two positions such as between the holder and the ignitor and between the holder and the first cup are necessary to be crimped, with a simple structure, the fixing can be securely attained.
(2) The gas generants 3 accommodated in the first cup 2 are located in a space hermetically sealed by the O-ring 19 shoved in between the second cup 12 of the ignitor 4 and the expanded skirt portion 2c of the first cup 2. Thus, the gas generants 3 accommodated within the first cup 2 are hermetically sealed at one point and ambient atmosphere does not come in from a side of the ignitor 4; accordingly, the sealing performance to the gas generants 3 can be improved.
(3) The second cup 12 of the ignitor 4 is engaged in the first cup 2 and both are brought into close contact; accordingly, the first cup 2 is in a state supported by the ignitor 4. As a result, even when the first cup 2 is made longer in an axial direction as shown in the drawing, the stability against an external force can be obtained.
(4) Since the second cup 12 of the ignitor 4 is engaged in a close contact state within the metallic first cup 2, when the igniting agent 11 in the second cup 12 is ignited, an external periphery of the second cup 12 can be reinforced with the first cup 2. Accordingly, a weak portion at the bottom of the second cup 12 of the ignitor 4 can be unfailingly broken.
(5) Since the O-ring 19 is located in a boundary portion between the second cup 12 of the ignitor 4 and the plug 16, the O-ring 19 is positionally stabilized and the sealing performance can be improved.
(6) With the expanded tapered portion 16b (Fig. 2) of an external periphery of the plug 16 of the ignitor 4 and the expanded skirt portion 2c of the first cup 2 in a mutually tapered state, the projection 22 is calked. Accordingly, the fixation due to the crimping can be stably performed.

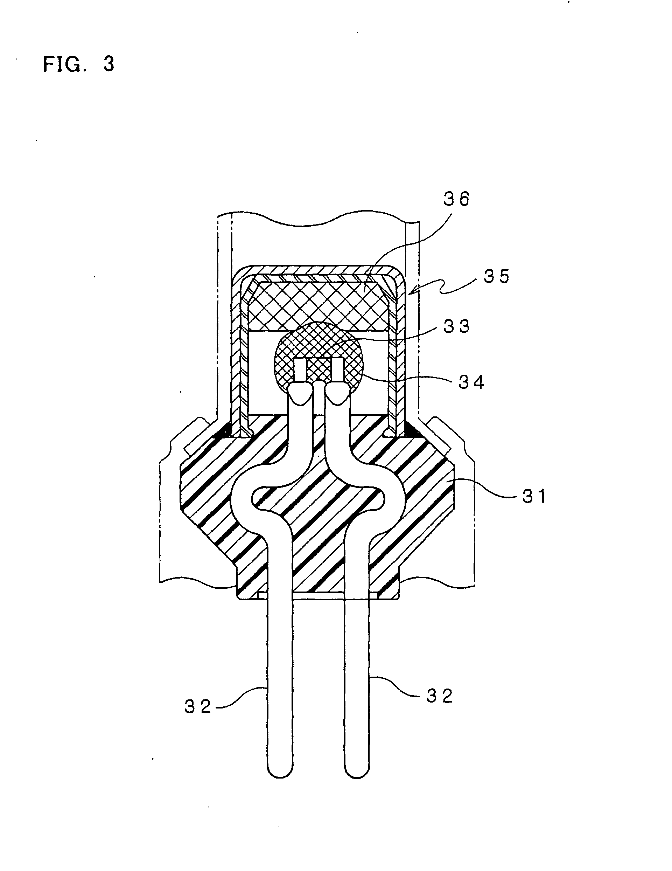

The embodiment according to the invention is not restricted to the above one but may be modified as shown for instance in the following.
(1) In the ignitor 4, one according to the hermetic sealing as shown in Fig. 2 is convenient from a viewpoint of forming in a shape that is widened in a diameter direction and does not expand in an axial direction; however, a fuse head type such as shown in Fig. 3 may be used.
   In Fig. 3, two pins 32, 32 project from a plug 31, an electric bridging cap 33 is attached to tip ends of the two pins 32, 32, and in the surroundings of the electric bridging cap 33 a fuse head 34 is formed. A second cup 35 is attached to the plug 31 so that the fuse head 34 may touch an igniting agent 36 in the second cup 35, and thereby a fuse head type ignitor is formed.
(2) The fixation of the first cup 2 and the ignitor 4 with the holder 5 is preferably performed according to the crimping. Other than the crimping, as far as the stable fixation can be attained, means for co-fastening is not restricted to particular one. For instance, by screwing a cap nut-like one against a holder, the first cup 2 and the ignitor 4 may be co-fastened to the holder 5.
(3) The sealing member, as far as having the sealing properties, is not restricted to particular one. Other than the O-ring 19 that is a single member, one in which rubber or the like is printed onto the first cup 2 with an O-character shape, silicone-base adhesives and epoxy-based adhesives can be cited.

### Embodiment

In the following, results of a 10 cc bomb test with an example of a gas generator involving the invention are shown.

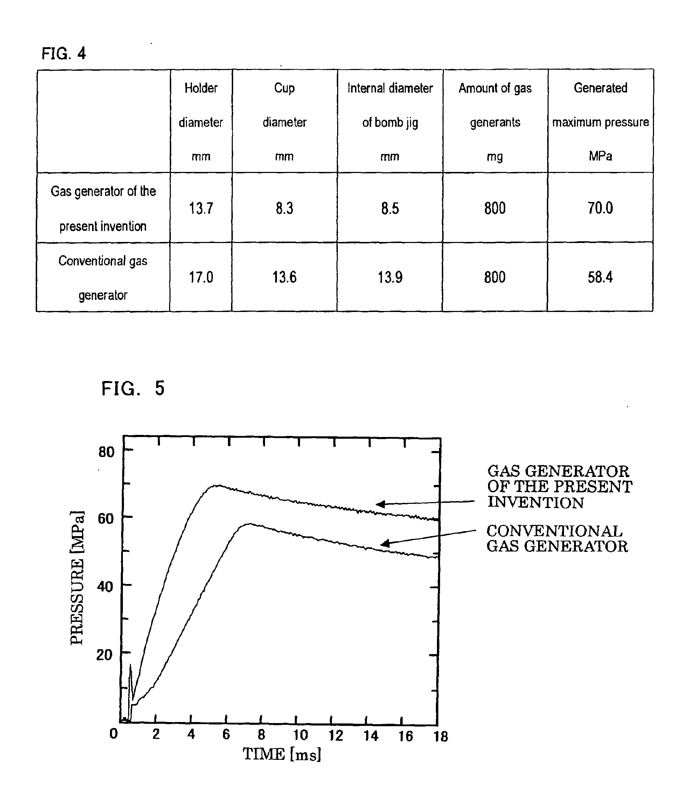

In Fig. 4, specifications of an example of a gas generator involving the invention that is used in the 10 cc bomb test and of an conventional gas generator that is used in a sheet belt pretensioner are shown together. In the gas generator according to the invention, in order to compare with the conventional gas generator, a gas generation amount is made the same with that of the gas generator used in the conventional sheet belt pretensioner.

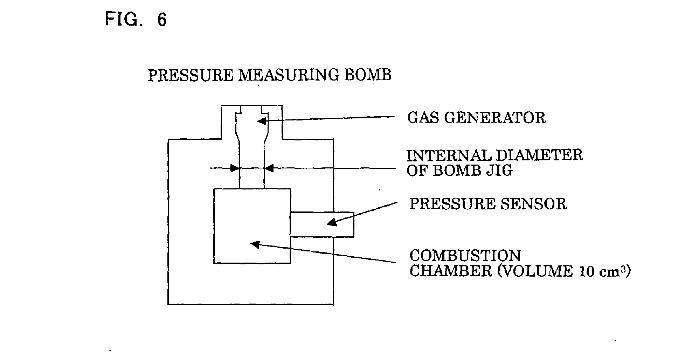

In the 10 cc bomb test, as shown in Fig. 6, a pressure measurement bomb made of a robust material such as stainless steel or the like is used. The gas generator is attached to a bomb jig disposed to the pressure measurement bomb. As the bomb jig, one that is larger by from 0.2 to 0.4 mm in an external diameter than a cup portion of the gas generator is used. The gas generator is connected to a constant current pulse generator with an ignition current cable, an ignition current is energized (0.8 A x 2 ms), and thereby the gas generator is actuated. A pressure of a combustion gas from the gas generator is measured through a pressure sensor disposed in a combustion chamber with a measurement instrument such as an oscilloscope and the like. In the 10 cc bomb test, an output of the gas generator is thus measured. Results are shown in Fig. 5.

As shown in Figs. 4 and 5, it is found that the gas generator according to the invention, in comparison with the conventional gas generator, can be made smaller in size, and can extract a higher pressure (high generated maximum pressure) because with the same amount of the gas generants an internal diameter of the cylinder assumed bomb jig can be made slender.

### Industrial Applicability

As detailed in the above, according to the gas generator involving the invention, since a fixing structure of the ignitor and the cup to the holder can be shared, the structure can be simplified and the sealing performance can be improved. Furthermore, the gas generator according to the invention, in comparison with the conventional gas generator, at the same amount of the gas generants, can be made slender in an internal diameter of the cylinder of the motor vehicle safety device. Accordingly, a higher output (high generated maximum pressure) can be extracted.

## Claims

1. A gas generator comprising a bottomed cylindrical first cup that accommodates gas generants that generate a gas owing to combustion; an ignitor disposed partially inserted in the first cup; and a holder that covers the ignitor and holds an end side of the first cup;
wherein the end of the first cup and the ignitor are fixed by co-fastening the holder toward the ignitor.

2. The gas generator as set forth in claim 1:
wherein a sealing member is disposed between the end of the first cup and the ignitor.

3. The gas generator as set forth in claim 1:
wherein the ignitor includes a second cup that accommodates igniting agents and a plug that holds the second cup;
wherein the second cup is inserted in the first cup in an engaged state where an exterior of the second cup engages in an interior of the first cup.

4. The gas generator as set forth in claim 3:
wherein the end of the first cup is inserted so as to touch the plug, and the sealing member is disposed in a boundary portion between the second cup and the plug.

5. The gas generator as set forth in claim 4:
wherein the end of the first cup and the plug portion touching the end of the first cup are formed into a mutually tapered shape.

6. The gas generator as set forth in claim 5:
wherein the ignitor and the end of the first cup are fixed by crimping the holder toward the ignitor.

7. The gas generator as set forth in claim 2:
wherein the ignitor includes a second cup that accommodates igniting agents and a plug that holds the second cup;
wherein the second cup is inserted in the first cup in an engaged state where an exterior of the second cup engages in an interior of the first cup.

8. The gas generator as set forth in claim 7:
wherein the end of the first cup is inserted so as to touch the plug, and the sealing member is disposed in a boundary portion between the second cup and the plug.

9. The gas generator as set forth in claim 8:
wherein the end of the first cup and the plug portion touching the end of the first cup are formed into a mutually tapered shape.

10. The gas generator as set forth in claim 9:
wherein the ignitor and the end of the first cup are fixed by crimping the holder toward the ignitor.
